# EUROPEAN PATENT SPECIFICATION

(11) **EP 1 036 497 B1**
(45) Date of publication and mention of the grant of the patent: **14.01.2004**
(21) Application number: 00105218.2
(22) Date of filing: 13.03.2000
(51) Int. Cl.: A01M 9/00

(54) **Valve**
Ventil
Soupape

(30) Priority: 15.03.1999 GB 9905948
(43) Date of publication of application: 20.09.2000
(73) Proprietor: Syngenta Participations AG, 4058 Basel (CH)
(72) Inventor: Cowland, John Patrick, Chrishall, Royston, Hertsf SG8 8RP (GB); Tuliani, Nicholas Deepak, Cambridge, CB1 7BX (GB)

(56) References cited:
- EP-A- 0 389 919
- EP-A- 0 498 473
- EP-A- 0 685 155
- US-A- 4 947 986

## Description

This invention relates to a valve for controlling the flow of granules from a first container to a second container according to the preamble of claim 1. A valve of this kind is already known from US-A-4 947 986. Furthermore conventional valve systems, such as those disclosed in EP-A-0389919, EP-A-498473 and EP-A-0498474, which control the flow of granular material, especially chemical material for use in the agricultural industry, have taught the use of two self sealing valve members, one located on each of the container to be emptied and the receiving container. A mechanical engagement means is provided such that the valves must cooperate and are opened in a sequence such whereby the valve on the receiving container is the first valve to open and the last valve to close. This feature permits any material which has been discharged from the container to be emptied to enter the receiving container prior to the closing of the valve. This prevents the operator of the valve system from coming into contact with the granular material being transferred.

The ability of this prior system to prevent the granular material from coming into contact with the operator is of great importance when the material to be transferred is a granular pesticide for use in the agricultural industry.

Such valve arrangements have a number inherent disadvantages. Firstly the system is complex to manufacture due to the large number of moving parts and this, in turn, increases the cost of such a product. Secondly often these prior valve systems are designed for use with a material feed device such as a feed drill. This means that a constant rate supply of material is required and accordingly the construction of such prior valve systems does not permit any variable control to be maintained over the rate of flow of the granular material. The valve system can only be in one of two distinct states: either fully closed or fully open.

Accordingly it is an object of the present invention to provide a valve which is simple to manufacture and which contains the minimum of moving parts.

It is a further object of the invention to provide a valve which can easily and simply control the rate of flow of the granular material from the container to be emptied.

According to one aspect of the present invention there is provided a valve for controlling the flow of granules from a first container to a second container, the valve, when in use attached to the first container, comprising a movable valve member which is biased to a closed position and engagement means for engaging, in use, with a coupling unit attached to the second container, wherein, in use, the relative rotation of the valve to the coupling unit controls the extent to which the valve is opened.

According to a second aspect of the present invention there is provided a system of transferring granules from a first container to a second container, the system comprising a valve of the type defined above and a coupling unit, when in use, arranged to be attached to the second container and having means for engagement with the rotatable valve.

Preferably the valve is provided with a valve seat on which the movable valve member rests when in the closed position. The movable valve member may be provided with sealing faces which cut through the granule flow to prevent granular material from being trapped between the movable valve member and the valve seat when the valve is closed.

The coupling unit may be provided with a central tube having a slot for engagement with the movable valve member, the slot having a section substantially parallel to an axis, and a spiral section.

In use, the coupling unit may be attached to a mixing tank or to a tube which feeds directly into a mixing tank.

Preferably the movable valve member is provided with a pin for engagement in the spiral section. Further, the pin may only be removed from the slot when the valve member is in the fully closed position. This arrangement provides a "fail-safe" mechanism which prevents the valve system from being disconnected whilst the valve is still open. Therefore, it prevents unwanted granular material spillage and reduces the likelihood of operator exposure to the chemicals. In this way, the safety of the system is greatly improved.

The biasing means for urging the movable valve member to the closed position may be a helical steel spring.

The valve may be provided with a tamper evident ring for engagement with the first container and the valve. The tamper evident ring may be seated on a series of raised portions on the first container and may engage with similar projections on the valve. Alternatively the valve may be provided with recessed portions for receiving raised portions of the tamper evident ring. When the valve is rotated relative to the receiving container the tamper evident ring, which is formed from two parts frangibly joined together, is separated into distinct portions. The provision of the tamper evident ring helps to eliminate the risk of cross contamination of the stored product. Further the tamper evident ring provides evidence of an unauthorised attempt to unscrew the valve from the container.

The provision of a valve which can be removed from and reattached to the container enables refilling of the container. This is particularly advantageous when the valve, and the container to which this is attached, is used for dispensing a hazardous chemical, such as granular pesticide. This is because it enables the container to be reusable and for a closed loop refillable system to be set up between the granular material supplier and end user.

The valve may be used with containers which are translucent and which may be provided with graduated markings so that the quantity of material transferred can be monitored.

The containers may be formed from a plastics material, especially a thermoplastics material.

An example of the present invention will now be described with reference to the accompanying drawings, in which:
Figure 1 is a perspective view of a container and a receiving unit to which a valve is attached, prior to connection;
Figure 2 is a perspective view of a container and a receiving unit to which a valve has been fitted, after connection;
Figure 3 is a sectional view of a valve prior to connection;
Figure 4 is a sectional view of a valve when the valve is partially open; and
Figure 5 is a sectional view of a valve in which the valve member is fully opened.

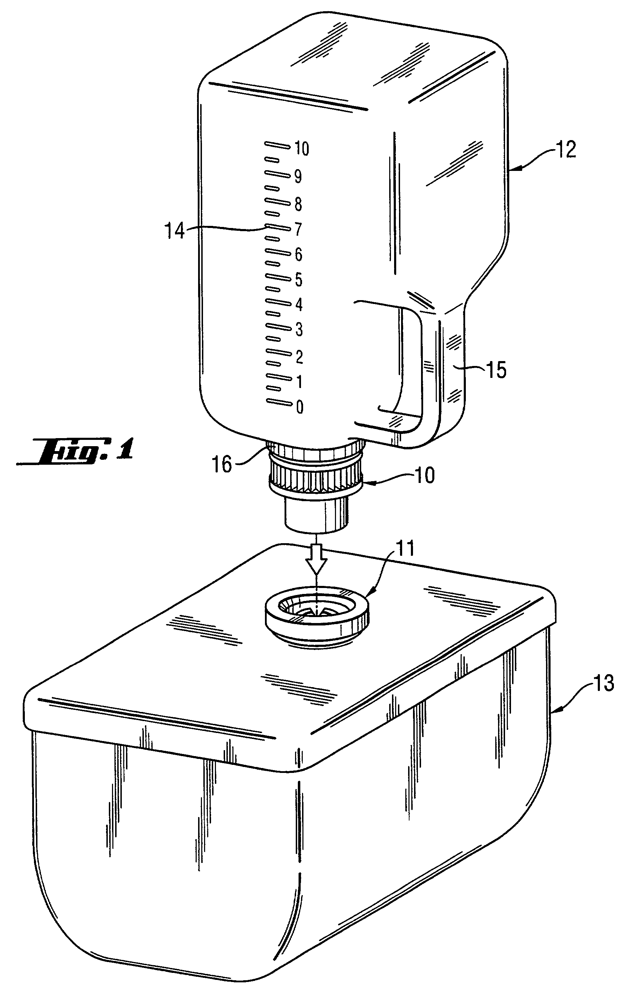

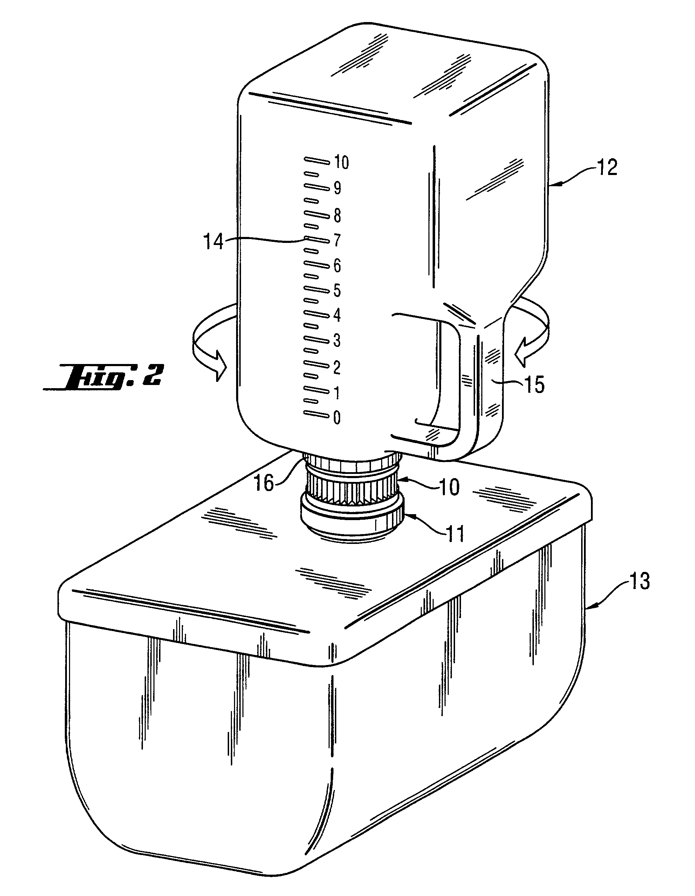

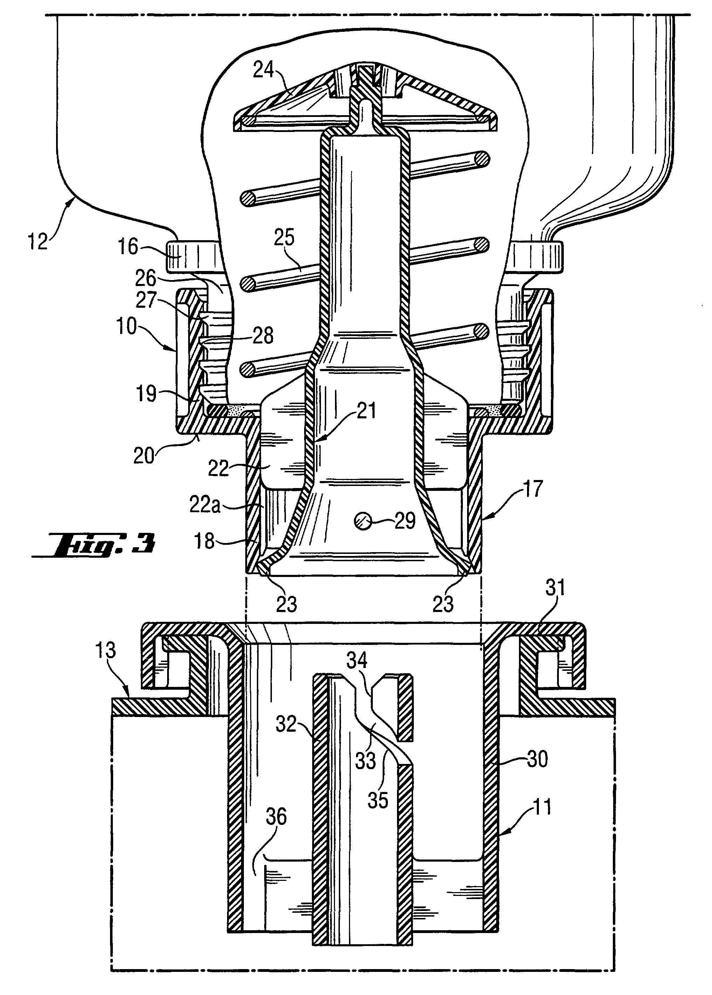

Referring to Figures 1 and 2, a valve is shown prior to connection and after connection. The valve is provided with a self-sealing valve 10 connected to a first container 12 which is provided with graduations 14, a handle 15 and a tamper evident ring 16. The container is, in this example, formed from a plastics material. A coupling unit 11 is provided on the uppermost surface of a second container 13. The valve 10 is operated by rotating the first container 12 in relation to the coupling unit 11 on the second container 13. The valve and the mechanism by which it is opened is now described with reference to Figures 3 to 5. In the example the valve has a diameter of approximately 6cm, and the first container neck a diameter of approximately 8cm.

Figure 3 shows the valve prior to engagement of the valve 10 with the coupling unit 11. The first container 12 and to which the valve 10 is fitted has been inverted. The valve 10 comprises a substantially cylindrical main body 17 which is provided with two portions 18,19 which are separated by a shoulder 20. A first portion 18 is radially smaller than a second portion 19 and can be inserted into the coupling unit 11. A moveable valve member 21 is provided coaxially with the main body 17. A number of fins 22 extend radially from the movable valve member 21 and engage in grooves (22a) on the main body 17 in which the valve member 21 slides, opening and closing the valve. The valve member 21 is provided with sealing faces 23 at one end and at the opposite end is provided with a cap 24. A helical spring 25 is located between the cap 24 and the inner face of the shoulder 20 and is in a partially compressed state. The spring 25 provides the biasing means for urging the valve member 21 to a closed position.

The first container 12 is provided with a neck 26 having external threads 27 which engage with internal threads 28 located on the inner face of the second portion 19 of the valve body. A tamper evident ring 16 is provided at the base of the neck 26 and engages on a serrated section on the first container 12. When the valve 10 is screwed on to the first container 12, the tamper evident ring locates and locks into complementary recessed slots provided on the main body 17 of the valve. If there is relative rotation of the first container 12 to the valve 10, the tamper evident ring 16 is broken and can be easily spotted by an operator. A horizontal locating pin 29 is provided proximate to the sealing face end of the valve member 21.

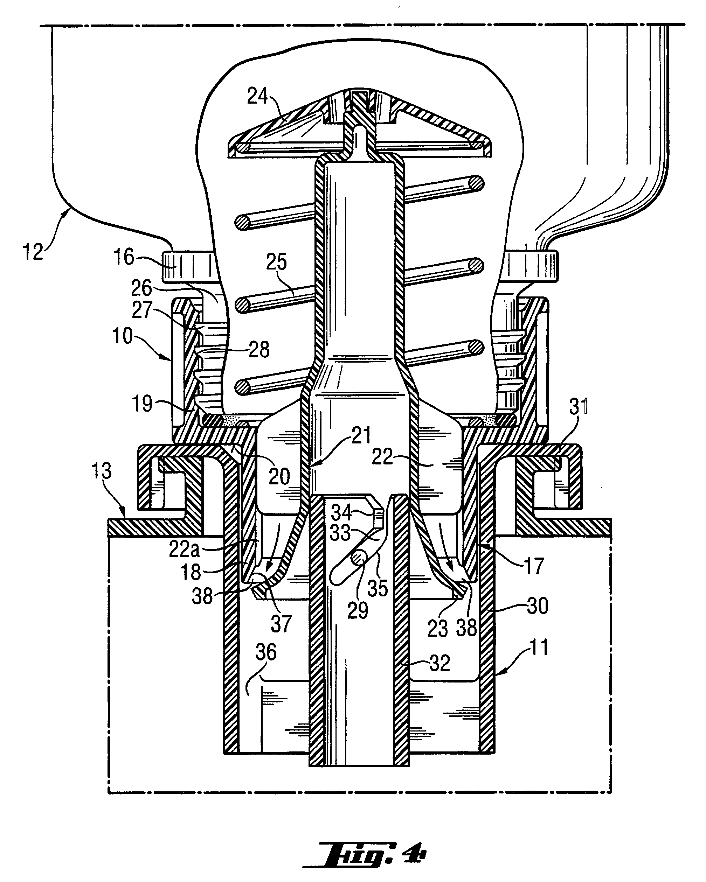

The coupling unit 11 is provided with a substantially cylindrical main body 30 having, at one end, an overturned lip 31 for abutting against the outer face of the shoulder 20. A central tube 32 is provided with a slot 33 having a vertical section 34 and a downwardly cut spiral section 35. The coupling unit 11 is provided with a bore 36 extending therethrough for allowing the passage of granular material. Figure 4 shows the valve in a partially opened state. The valve 10 is engaged with the coupling unit 11 by placing the locating pin 29 in the vertical section 34 of the slot 33. The shoulder 20 on the valve 10 abuts against the overturned lip 31 of the coupling unit 11. As the first container 12 is rotated, the valve member 21 is forced to move downward as the fins 22 are located in grooves (22a) on the valve body 17. As the valve is turned, the locating pin 29 is forced to move along the downwardly cut spiral section 35 of the slot 33. As the locating pin 29 is forced downwardly, the valve member 21 is urged in a downwardly direction and hence a gap 38 opens between the sealing faces 23 and the valve seat 37. The degree of opening of the valve 10 and hence the discharge rate of granular material can be precisely regulated by the operator by controlling how far the container is twisted. Further the container 12 can be completely emptied or part emptied of its granular contents.

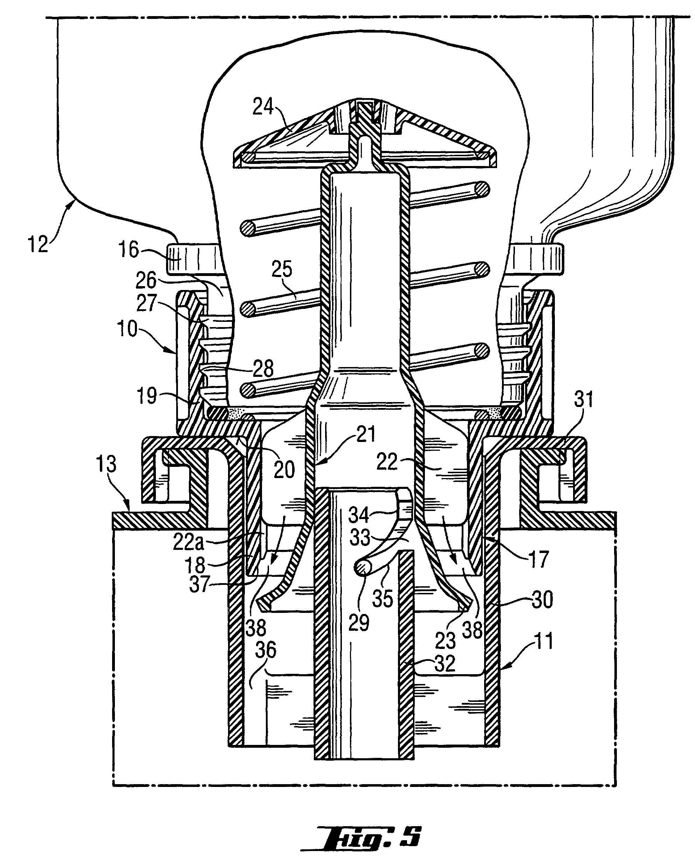

Figure 5 shows the valve system when the valve 10 is in a fully opened position and as such the opening 38 is at its maximum extent.

The valve 10 is closed by rotating the first container 12 in the opposite direction which causes the locating pin 29 to move upwards in the spiral section 35 of the slot 33. With the compression tension of the helical spring 25 urging the valve member 21 in an upwardly direction, the sealing faces 23 cut through the granular flow and seal against the valve seat 37. Any granules that have not been retained in the valve 10 are allowed to fall through the bore 36 of the coupling unit 11. Once the first container 12 has been returned to its stop position and the valve has been fully closed, the operator can remove the first container 12 and valve 10 from the coupling unit 11. This can only be achieved when the valve is in the fully closed position and hence the locating pin 29 is at the base of the vertical section 34 of the groove 33. This prevents the operator from accidentally separating the first container 12 from the coupling unit 11 while the valve 10 is in an open position. This accordingly reduces the risk of a spillage of the granular material.

## Claims

1. A valve (10), adapted to be attached to a first container (12), said first container (12) adapted to contain a granular product therein, and adapted to be attached to a second container (13), said second container (13) having a valve coupling unit (11) thereon, whereby said valve (10) is adapted to connect to said second container (13) through said valve coupling unit (11), said valve (10) adapted to control the flow of said granular product from said first container (12) into said second container (13), said valve (10) **characterized by**
a movable valve member (21) provided with a pin (29) for engagement, in use, in a spiral section (35) in the coupling unit (11);
biasing means which biases said movable valve member (21) to a closed position;
engagement means for engaging, in use, with a coupling unit (11) attached to said second container (13), wherein, in use, the relative rotation of the valve (10) to the coupling unit (11) controls the extent to which the valve (10) is opened.

2. A valve (10) according to claim 1, further comprising a valve seat (37) on which the movable valve member (21) rests when in the closed position.

3. A valve (10) according to either claim 1 or claim 2, wherein the movable valve member (21) is provided with sealing faces (23) which cut through the granule flow to prevent granular material from being trapped between the movable valve member (21) and the valve seat (37) when the valve (10) is closed.

4. A valve (10) according to any one of the preceding claims, wherein the pin (29) can only be removed from the spiral section (35) when the valve member is in the fully closed position.

5. A valve (10) according to any one of the preceding claims, wherein the biasing means is a helical steel spring (25).

6. A valve (10) according to any one of the preceding claims further comprising:
connecting means for connecting the valve (10) to the container in use, the means comprising a member surrounding the engagement means and providing a screw thread (27) for engagement with a corresponding screw thread (28) in the container; and
wherein the valve member (21) is positioned coaxially within the connecting means and further comprises at least one fin (22) for engagement with a groove (22a) in the connecting member and a cap connecting the valve member (21) and the connecting member.

7. A valve (10) according to any one of the preceding claims, further comprising a tamper evident ring (16) for engagement, in use with the first container (12).

8. A valve (10) according to claim 8, wherein the tamper evident ring (16) is seated, in use, on a series of raised portions on the first container (12) and engages with similar projections on the valve (10).

9. A valve (10) according to claim 8, wherein the valve (10) is provided with recess portions for receiving raised portions of the tamper evident ring (16).

10. A system for transferring granules from a first container (12) to a second container (13), the system comprising a rotatable valve (10) according to any one of the preceding claims and a coupling unit (11), when in use, arranged to be attached to the second container (13) and having means for engagement with the rotatable valve (10).

11. A system according to claim 10, wherein the coupling unit (11) is provided with a central tube (32) having a slot (33) for engagement with the movable valve member (21).

12. A system according to either claim 10 or claim 11, wherein the slot (33) is provided with a section (34) substantially parallel to an axis and a spiral section (35).

13. A system according to any one of claims 10 to 12, wherein the coupling unit (11) is attached to a mixing tank or to a tube which feeds directly into the mixing tank.

14. A system according to any one of claims 10 to 13, further comprising first and second containers (12, 13).

15. A system according to claim 14, wherein either or both containers (12, 13) are translucent.

16. A system according to either claim 14 or claim 15, wherein either or both containers (12, 13) have graduated markings (14).

17. A container having a valve (10) according to any of claims 1 to 9.

18. A container according to claim 17, the container holding granular pesticide.

## Patentansprüche

1. Ventil (10), das dazu ausgelegt ist, an einem ersten Behälter (12) angebracht zu werden, wobei der erste Behälter (12) dazu ausgelegt ist, ein körniges Produkt darin zu enthalten und dazu ausgelegt ist, an einem zweiten Behälter (13) angebracht zu werden, wobei der zweite Behälter (13) eine Ventilkopplungseinheit (11) daran aufweist, wobei das Ventil (10) dazu ausgelegt ist, durch die Ventilkopplungseinheit (11) mit dem zweiten Behälter (13) zu verbinden, wobei das Ventil (10) dazu ausgelegt ist, die Strömung des körnigen Produkts vom ersten Behälter (12) zu dem zweiten Behälter (13) zu steuern, wobei das Ventil (10) **gekennzeichnet ist durch**
ein bewegliches Ventilelement (21), das mit einem Stift (29) zum Eingriff mit einem Spiralabschnitt (35) in der Kopplungseinheit (11) bei der Verwendung versehen ist;
ein Vorspannungsmittel, das das bewegliche Ventilelement (21) in eine geschlossene Position vorspannt;
ein Eingriffsmittel zum Eingriff mit einer Kopplungseinheit (11) bei der Verwendung, die an dem zweiten Behälter (13) angebracht ist, wobei bei der Verwendung die relative Drehung des Ventils (10) zur Kopplungseinheit (11) den Grad steuert, in dem das Ventil (10) geöffnet wird.

2. Ventil (10) nach Anspruch 1, welches ferner einen Ventilsitz (37) umfasst, an dem das bewegliche Ventilelement (21) sitzt, wenn es sich in der geschlossenen Position befindet.

3. Ventil (10) nach entweder Anspruch 1 oder Anspruch 2, wobei das bewegliche Ventilelement (21) mit Dichtungsflächen (23) versehen ist, die den Körnchenstrom durchtrennen, um zu verhindern, dass körniges Material zwischen dem beweglichen Ventilelement (21) und dem Ventilsitz (37) eingefangen wird, wenn das Ventil (10) geschlossen wird.

4. Ventil (10) nach einem der vorangehenden Ansprüche, wobei der Stift (29) nur aus dem Spiralabschnitt (35) entfernt werden kann, wenn sich das Ventilelement in der vollständig geschlossenen Position befindet.

5. Ventil (10) nach einem der vorangehenden Ansprüche, wobei das Vorspannungsmittel eine schraubenförmige Stahlfeder (25) ist.

6. Ventil (10) nach einem der vorangehenden Ansprüche, welches ferner umfasst:
ein Verbindungsmittel zum Verbinden des Ventils (10) mit dem Behälter bei der Verwendung, wobei das Mittel ein Element umfasst, das das Eingriffsmittel umgibt und ein Schraubengewinde (27) zum Eingriff mit einem entsprechenden Schraubengewinde (28) im Behälter bereitstellt; und
wobei das Ventilelement (21) koaxial innerhalb des Verbindungsmittels angeordnet ist und ferner mindestens eine Rippe (22) zum Eingriff mit einer Nut (22a) im Verbindungselement und eine Kappe, die das Ventilelement (21) und das Verbindungselement verbindet, umfasst.

7. Ventil (10) nach einem der vorangehenden Ansprüche, welches ferner einen Eingriffssichtring (16) zum Eingriff mit dem ersten Behälter (12) bei der Verwendung umfasst.

8. Ventil (10) nach Anspruch 8, wobei der Eingriffssichtring (16) bei der Verwendung auf einer Reihe von erhabenen Teilen am ersten Behälter (12) sitzt und mit ähnlichen Vorsprüngen am Ventil (10) in Eingriff steht.

9. Ventil (10) nach Anspruch 8, wobei das Ventil (10) mit Aussparungsteilen zum Aufnehmen der erhabenen Teile des Eingriffssichtrings (16) versehen ist.

10. System zum Überführen von Körnchen von einem ersten Behälter (12) in einen zweiten Behälter (13), wobei das System ein drehbares Ventil (10) nach einem der vorangehenden Ansprüche und eine Kopplungseinheit (11) umfasst, die, wenn sie in Gebrauch ist, zum Anbringen am zweiten Behälter (13) angeordnet ist und ein Mittel zum Eingriff mit dem drehbaren Ventil (10) aufweist.

11. System nach Anspruch 10, wobei die Kopplungseinheit (11) mit einem zentralen Rohr (32) mit einem Schlitz (33) zum Eingriff mit dem beweglichen Ventilelement (21) versehen ist.

12. System nach entweder Anspruch 10 oder Anspruch 11, wobei der Schlitz (33) mit einem Abschnitt (34), der im Wesentlichen zu einer Achse parallel ist, und einem Spiralabschnitt (35) versehen ist.

13. System nach einem der Ansprüche 10 bis 12, wobei die Kopplungseinheit (11) an einem Mischtank oder einem Rohr, das direkt in den Mischtank führt, angebracht ist.

14. System nach einem der Ansprüche 10 bis 13, welches ferner einen ersten und einen zweiten Behälter (12, 13) umfasst.

15. System nach Anspruch 14, wobei einer oder beide Behälter (12, 13) durchsichtig sind.

16. System nach entweder Anspruch 14 oder Anspruch 15, wobei einer oder beide Behälter (12, 13) Messmarkierungen (14) aufweisen.

17. Behälter mit einem Ventil (10) nach einem der Ansprüche 1 bis 9.

18. Behälter nach Anspruch 17, wobei der Behälter körniges Pestizid enthält.

## Revendications

1. Soupape (10) adaptée à être fixée à un premier récipient (12), ledit premier récipient (12) étant adapté à contenir un produit granulaire à l'intérieur, et adapté à être fixé à un second récipient (13), ledit second récipient (13) comportant un module de couplage de soupape (11) sur celui-ci, de telle sorte que ladite soupape (10) soit adaptée à être reliée audit second récipient (13) par l'intermédiaire dudit module de couplage de soupape (11), ladite soupape (10) étant adaptée à commander d'écoulement dudit produit granulaire dudit premier récipient (12) dans ledit second récipient (13), ladite soupape (10) étant **caractérisée par**
un élément de soupape mobile (21) muni d'une tige (29) destinée à venir en prise, pendant l'utilisation, dans une section en spirale (35) dans le module de couplage (11);
un moyen de poussée qui sollicite ledit élément de soupape mobile (21) vers une position fermée ;
un moyen d'engagement pour venir en prise, pendant l'utilisation, avec un module de couplage (11) fixé audit second récipient (13), dans lequel, pendant l'utilisation, la rotation relative de la soupape (10) par rapport au module de couplage (11) commande l'importance dont la soupape (10) est ouverte.

2. Soupape (10) selon la revendication 1, comprenant en outre un siège de soupape (37) sur lequel repose l'élément de soupape mobile (21) lorsqu'il est dans la position fermée.

3. Soupape (10) selon l'une ou l'autre de la revendication 1 ou la revendication 2, dans lequel l'élément de soupape mobile (21) est muni de faces d'obturation (23) qui interrompent l'écoulement des granules pour empêcher le matériau granulaire d'être piégé entre l'élément de soupape mobile (21) et le siège de soupape (37) lorsque la soupape (10) est fermée.

4. Soupape (10) selon l'une quelconque des revendications précédentes, dans lequel la tige (29) ne peut être enlevé de la section en spirale (35) que lorsque l'élément de soupape est dans la position entièrement fermée.

5. Soupape (10) selon l'une quelconque des revendications précédentes, dans lequel le moyen de poussée est un ressort hélicoïdal en acier (25).

6. Soupape (10) selon l'une quelconque des revendications précédentes, comprenant en outre:
un moyen de liaison pour relier la soupape (10) au récipient pendant l'utilisation, le moyen comprenant un élément entourant le moyen d'engagement et fournissant un filet de vis (27) pour venir en prise avec un taraudage de vis correspondant (28) dans le récipient ; et
dans lequel l'élément de soupape (21) est positionné de façon coaxiale à l'intérieur du moyen de liaison et comprend, en outre, au moins une ailette (22) pour venir en prise avec une gorge (22a) dans l' élément de liaison et un couvercle reliant l'élément de soupape (21) et l'élément de liaison.

7. Soupape (10) selon l'une quelconque des revendications précédentes, comprenant, en outre, une bague d' inviolabilité (16) pour venir en prise, pendant l'utilisation, avec le premier récipient (12).

8. Soupape (10) selon la revendication 8, dans lequel la bague d'inviolabilité (16) est disposée, pendant l'utilisation, sur une série de parties surélevées sur le premier récipient (12) et vient en prise avec des projections similaires sur la soupape (10).

9. Soupape (10) selon la revendication 8, dans lequel la soupape (10) est munie de parties en retrait pour recevoir les parties surélevées de la bague d'inviolabilité (16).

10. Système pour transférer des granules d'un premier récipient (12) vers un second récipient (13), le système comprenant une soupape rotative (10) selon l'une quelconque des revendications précédentes et un module de couplage (11), agencé, pendant l'utilisation, pour être fixé au second récipient (13) et comportant un moyen pour venir en prise avec la soupape rotative (10).

11. Système selon la revendication 10, dans lequel le moyen de couplage (11) est muni d'un tube central (32) comportant une fente (33) pour venir en prise avec l'élément de soupape mobile (21).

12. Système selon l'une ou l'autre de la revendication 10 ou la revendication 11, dans lequel la fente (33) est munie d'une section (34) sensiblement parallèle à un axe et d'une section en spirale (35).

13. Système selon l'une quelconque des revendications 10 à 12, dans lequel le module de couplage (11) est fixé à un réservoir de mélange ou à un tube qui débouche directement dans le réservoir de mélange.

14. Système selon l'une quelconque des revendications 10 à 13, comprenant, en outre, un premier et un second récipient (12, 13).

15. Système selon la revendication 14, dans lequel l'un ou l'autre ou les deux récipients (12, 13) sont translucides.

16. Système selon l'une ou l'autre de la revendication 14 ou la revendication 15, dans lequel l'un ou l'autre ou les deux récipients (12, 13) comporte des marquages gradués (14).

17. Récipient comportant une soupape (10) selon l'une quelconque des revendications 1 à 9.

18. Récipient selon la revendication 17, le récipient contenant un pesticide granulaire.
